# EUROPEAN PATENT APPLICATION

(11) **EP 2 696 477 A1**
(43) Date of publication of application: **12.02.2014**
(21) Application number: 11862981.5
(22) Date of filing: 01.04.2011
(51) Int. Cl.: H02K 3/34, H02K 15/04, H02K 15/06, H02K 15/085

(54) **STATOR OF ROTATING ELECTRICAL MACHINE, METHOD OF MANUFACTURING SAME, AND APPARATUS FOR MANUFACTURING SAME**

(71) Applicant: TOYOTA JIDOSHA KABUSHIKI KAISHA, Toyota-shi, Aichi-ken, 471-8571 (JP)
(72) Inventor: UMEHARA Yuji, Toyota-shi Aichi 471-8571 (JP); URANO Hiroaki, Toyota-shi Aichi 471-8571 (JP); KIMURA Hideaki, Anjo-shi Aichi 444-1192 (JP)
(74) Representative: TBK
(86) International application number: PCT/JP2011/058397
(87) International publication number: WO 2012/137273

(57) **Abstract**

Provided is a method of manufacturing a stator of a rotating electrical machine that is equipped with: distributed-winding cassette coils, each of which has a straight-angled conductor wire wound around; and a stator core comprising slots into which the cassette coils are to be inserted. The method of manufacturing a stator of a rotating electrical machine comprises: an assembled-coil assembling process for assembling a plurality of adjacent in-phase cassette coils to form a set of assembled coils; an insulation paper winding-around process for winding insulation papers cut to be a prescribed shape around the outer circumference of proximity sections where cassette coils of an assembled coil comes in proximity with each other; an insulation paper anchoring process for anchoring end sections of the wound-around insulation papers; and a slot inserting process for superimposing the assembled coils, which are bound together by having the end sections of the insulation papers thereof anchored, upon the stator core in the circumferential direction thereof, and inserting the assembled coils into the slots.

## Description

### TECHNICAL FIELD

The present invention relates to a stator of a rotary electric machine including cassette coils formed of a flat wire wound in a distributed winding form and a stator core including slots in which the cassette coils are inserted, a method for manufacturing the stator, and an apparatus for manufacturing the stator.

### BACKGROUND ART

When distributed winding coils each formed of a wound flat rectangular conductor wire ("flat wire") are inserted in slots of a stator core, there are sections in which coil end portions are placed close to each other at ends of the stator core in the axial direction. In the coil end portions of the distributed winding coils, specifically, one set of in-phase (same-phase) coils are arranged close to another set of coils different in phase from the former set and adjacently placed thereto in a circumferential direction. Herein, since no potential difference is generated between the in-phase coils, insulation breakdown is less likely to occur even if the coils are close to each other. However, a potential difference is generated between different-phase coils due to phase difference. Thus, insulation breakdown is likely to occur in the section where the coils are close to each other. In this case, ideally, the coil end portions are designed to provide clearances or gaps between adjacent coils to allow insulation between the phases (interphase insulation) by the gaps.

However, considering a coil forming manner, a coil size tolerance, etc., it is difficult to reliably provide the gaps between the coils to ensure interphase or phase-to-phase insulation. In particular, in the field of recent rotary electric machines demanded for size reduction and high output power for use in driving electric vehicles and hybrid vehicles, coils formed of wound flat wires are frequently used. Thus, spring back or the like is apt to occur in bent or turned wire portions and also coil assembling errors are likely to appear. Accordingly, it is increasingly hard to reliably provide the gaps between the coils to ensure interphase insulation.

As a method for this coil interphase insulation, for example, Patent Document 1 discloses a coating spray method in which a conductor formed of a bare wire insulated and wound in a coil form, and a powder coating material is sprayed thereto by an electrostatic spray to form an insulation layer on a coil outer periphery and between coils. This coating spray method enables an easy insulating work at low manufacturing costs irrespective of the size of coil shape and the shape of terminals.

A technique related to an interphase insulation sheet of a rotary electric machine to be used to insulate between different-phase coils in coil end portions of a stator is disclosed in Patent Documents 2 and 3.

The technique of Patent Document 2 is a method for placing interphase insulation sheets. Each sheet includes a pair of interphase portions spaced opposite at a shorter distance than the axial length of a stator core and connecting portions integrally connecting the interphase portions at least partially including bends which are non-straight portions. Each sheet is integrally made in such a way that a flexibly deformable insulation material is cut to remove unnecessary portions. This sheet is inserted and set in the slots of the stator while the bends of the connecting portions are extended linearly by elastic deformation, so that the interphase portions are placed between the different-phase coils in the corresponding coil end portions. According to this method, the area of the unnecessary portions cut and removed to be wasted from the insulation material is reduced by an amount corresponding to a decreased distance between the interphase portions. This can increase a material yield of the insulation material, leading to a reduction in initial cost of the interphase insulation sheets.

On the other hand, the technique of Patent Document 3 is a method for attaching insulators to cover crossing or bridging portions between different phases in a coil end portion. Each insulator is made by folding a nearly rectangular sheet-shaped insulation material into two and bonding a side portion adjacent to one end of a fold line to form a hood shape. According to this method, the hood-shaped insulators can be easily produced and thus costs for producing the interphase insulators can be lowered.

### RELATED ART DOCUMENTS

### PATENT DOCUMENTS

- Patent Document 1:: JP-A-2002-33213
- Patent Document 2:: JP-A-2003-319594
- Patent Document 3:: JP-A-2010-239740

### SUMMARY OF INVENTION

### PROBLEMS TO BE SOLVED BY THE INVENTION

However, the technique disclosed in Patent Document 1 is the method for forming the insulation layer on the coil outer periphery and between the coils by spraying the powder coating material using the electrostatic spray. When necessary portions are to be coated, a masking step of specifying a portion to be coated by masking and a drying step of drying the coated portion are required. This method also has a problem with variation in particle size distribution of powder, which likely causes unevenness in coating thickness.

The technique disclosed in Patent Document 2 is the method for attaching the interphase insulation sheets in the stator by inserting and placing each sheet with the bends of the connecting portions being linearly extended by elastic deformation into the slots of the stator core and placing the interphase portions between the different-phase coils in the corresponding coil end portions. Accordingly, the extended bends may be contracted in the course of attachment of the interphase insulation sheet to the stator, and the interphase portions may be displaced. This causes a problem that the interphase insulation sheet could not insulate the necessary portions.

The technique disclosed in Patent Document 3 is the method for attaching the hood-shaped insulator to cover the crossing portions of different phases in the coil end portion. Accordingly, it is difficult to reliably attach the hood-shaped insulator between the coils spaced with only a usually narrow gap. This causes a problem that the interphase insulation sheet is caught in the narrow gap and thus could not reach the necessary portions to insulate them.

Furthermore, the interphase insulation sheets of a rotary electric machine generally have to be made of an insulation material resistant to heat of 200°C or higher. A high insulating sheet is generally high in heat resistance. Thus, a heat input amount is required to increase in order to simply fix the insulation sheets by welding. However, as the heat input amount is increased, the insulation performance of the insulation sheets and the coil insulation coating (enamel) are more likely to be broken. To avoid such a defect, the insulation sheets have to be simply fixed.

The present invention has been made in view of the circumstances to solve the above problems and has a purpose to provide a stator of a rotary electric machine capable of simply and reliably placing an insulation sheet in a desired portion for interphase insulation and contributing to saving of insulation material and reduction in coil assembling cost, a method for manufacturing the stator, and an apparatus for manufacturing the stator.

### MEANS OF SOLVING THE PROBLEMS

To achieve the above purpose, a method for manufacturing a stator of a rotary electric machine which is one aspect of the invention provides the following configuration.
(1) In a method for manufacturing a stator of a rotary electric machine, the stator including cassette coils each formed of a flat rectangular conductor wire wound in a distributed winding form and a stator core including slots in which the cassette coils are inserted, the method includes: an assembled-coil assembling step of assembling a plurality of adjacent in-phase cassette coils to form a set of assembled coils; an insulation-sheet winding step of winding an insulation sheet cut in a predetermined shape around an outer periphery of a proximity section of the assembled coils in which the cassette coils are located close to each other; an insulation-sheet fixing step of fixing end portions of the wound insulation sheet to each other; and a slot inserting step of overlapping sets of the assembled coils in a circumferential direction of the stator core, each set being bound together by the insulation sheet having the end portions fixed to each other, and inserting the assembled coils in the slots. Herein, the proximity section of the assembled coils in which the cassette coils are located in proximity to, or close to, each other includes a section in which the cassette coils are in contact with each other.
(2) In the method for manufacturing a stator of a rotary electric machine described in (1), preferably, the insulation-sheet winding step includes winding the insulation sheet in a section of a coil end portion of the assembled coils, the section being close to a coil end portion of an adjacent different phase.
(3) In the method for manufacturing a stator of a rotary electric machine described in (2), preferably, the slot inserting step includes alternately placing the sets of assembled coils bound together by the insulation sheet having the end portions fixed to each other.
(4) In the method for manufacturing a stator of a rotary electric machine described in one of (1) to (3), preferably, the insulation-sheet fixing step includes fixing the end portions of the insulation sheet to each other, the end portions being overlapped in a winding direction.
(5) In the method for manufacturing a stator of a rotary electric machine described in one of (1) to (3), preferably, the insulation-sheet fixing step includes fixing the end portions of the insulation sheet to each other, the end portions being bent in a direction different from a winding direction and overlapped each other.
(6) In the method for manufacturing a stator of a rotary electric machine described in one of (1) to (5), preferably, the slot inserting step includes inserting the assembled coils in the slots in an axial direction of the stator core.
(7) In the method for manufacturing a stator of a rotary electric machine described in (2) or (3), preferably, the insulation-sheet fixing step includes fixing the end portions of the insulation sheet overlapped in a winding direction in at least one side of the coil end portions, and the slot inserting step includes inserting the assembled coils in the slots from the one side.
(8) In the method for manufacturing a stator of a rotary electric machine described in one of (1) to (7), preferably, the insulation sheet is formed of a base sheet and thermoplastic resin coated on a surface of the base sheet, the thermoplastic resin having a melting temperature lower than a melting temperature of the base sheet and an insulation coating covering the flat wire, and the insulation-sheet fixing step includes fixing the thermoplastic resin by welding.
(9) To achieve the above purpose, another aspect of the invention provides an apparatus for manufacturing a stator of a rotary electric machine, the stator including cassette coils each formed of a flat wire wound in a distributed winding form and a stator core including slots in which the cassette coils are inserted, the apparatus including: an assembled-coil assembling means to assemble a plurality of adjacent in-phase cassette coils to form a set of assembled coils; an insulation sheet winding means to wind an insulation sheet cut in a predetermined shape around an outer periphery of a proximity section of a coil end portion of the assembled coils in which the cassette coils are located close to each other; an insulation sheet fixing means to fix end portions of the wound insulation sheet to each other; and a slot inserting means to overlap sets of the assembled coils in a circumferential direction of the stator core, each set being bound together by the insulation sheet having the end portions fixed to each other, and insert the assembled coils in slots of the stator core.
(10) To achieve the above purpose, another aspect of the invention provides a stator of a rotary electric machine, including cassette coils each formed of a flat wire wound in a distributed winding form and a stator core including slots in which the cassette coils are inserted, wherein a plurality of adjacent in-phase cassette coils are assembled to form a set of assembled coils, an insulation sheet cut in a predetermined shape is wound around an outer periphery of a proximity section of a coil end portion of the assembled coils in which the cassette coils are located close to each other, and the coil end portion is provided with insulated portions on each of which the end portions of the insulation sheet are fixed so that the insulated portions are displaced by a slot pitch in a circumferential direction of the stator core.

### EFFECTS OF THE INVENTION

The method for manufacturing a stator of a rotary electric machine configured as above provides the following operations and effects. The configuration described in (1) includes an assembled-coil assembling step of assembling a plurality of adjacent in-phase cassette coils to form a set of assembled coils; an insulation-sheet winding step of winding an insulation sheet cut in a predetermined shape around an outer periphery of a proximity section of the assembled coils in which the cassette coils are located close to each other. Accordingly, the insulation sheet can be reliably placed in a section needing interphase insulation.

To be concrete, when the plurality of adjacent in-phase cassette coils are assembled to form a set of assembled coils, a set of different-phase assembled coils is arranged in a place adjacent to the former set of assembled coils in the end portion so that they are close to each other. For example, in the case of a three-phase rotary electric machine, assuming a set of assembled coils is a U phase, a set of V-phase assembled coils is arranged adjacent thereto, and further a set of W-phase assembled coils is arranged further adjacent thereto. This arrangement is repeated sequentially. Herein, the cassette coils have the same shape and are arranged in overlapping relation in the circumferential direction of the stator core. Accordingly, the proximity sections of the in-phase cassette coils are also the proximity sections close to the different-phase cassette coils.

Therefore, the adjacent in-phase cassette coils are assembled to form a set of assembled coils, and the insulation sheet cut in a predetermined shape is wound around the outer periphery of the proximity section of the assembled coils in which the cassette coils are located close to each other. Thus, the insulation sheet can be held in the section close to the adjacent different-phase assembled coils. This makes it possible to reliably place the insulation sheet in the section in which different-phase coils are close to each other and thus insulation breakdown may occur. Specifically, the insulation sheet can be simply and reliably placed in the section needing interphase insulation. Since the insulation sheet can be limited to the section needing interphase insulation, a use amount of the insulation material can be reduced, contributing to cost reduction. Although no insulation sheet is held between the in-phase coils, insulation breakdown is less likely to occur even when the coils are close to each other because no electric potential is generated between the in-phase coils.

The configuration (1) includes the insulation-sheet fixing step of fixing end portions of the wound insulation sheet to each other. Accordingly, the in-phase cassette coils can be bound together by the wound insulation sheet to form a set of assembled coils. The bound assembled coils can be carried without being displaced, and be inserted in the slots of the stator core. The insulation sheet remains having the end portions fixed even after the assembled coils are inserted in the slots of the stator core. Thus, the insulation sheet is less likely to be displaced from the desired section.

The configuration (1) includes the slot inserting step of circumferentially overlapping sets of the assembled coils, each set being bound together by the insulation sheet having the end portions fixed to each other, and inserting the assembled coils in the slots. Accordingly, the insulation sheet is wound and fixed around the coils prior to insertion of the coils in the slots. The insulation sheet can simply and reliably insulate the desired section without being caught in narrow gaps between the different-phase coils placed close to each other, differently from a method in which coils are inserted in slots of a stator core and then an insulation sheet is wound.

In the configuration (2), in the method for manufacturing a stator of a rotary electric machine described in (1), the insulation-sheet winding step includes winding the insulation sheet around the section of the coil end portion of the assembled coils close to an adjacent coil end portion of a different-phase. The insulation material can therefore be wound by a minimum size around the desired section. Specifically, one insulation sheet wound around a certain set of the assembled coils and the other insulation sheet wound around an adjacent set of different-phase assembled coils are arranged with a displacement in the circumferential direction of the stator. Accordingly, the one insulation sheet and the other insulation sheet complement each other so that the insulation sheets are placed almost all over the desired sections needing interphase insulation. Thus, the insulation sheets can be placed simply and reliably in the sections needing interphase insulation.

Because of the coil end portions, the insulation sheets can be wound around the sections in which the cassette coils are close to each other, each section providing a nearly rectangular cross section as a whole. As a result, the apparatus for winding the insulation sheets can be simplified, which contributes to further saving of the insulation material and reduction in coil assembling cost.

In the configuration (3), in the method for manufacturing a stator of a rotary electric machine described in (2), the slot inserting step includes alternately placing the sets of assembled coils bound together by the insulation sheet having the end portions fixed to each other. This can reduce the sections to be wrapped with the insulation material to a minimum. In this case, no insulation sheet is wound on the adjacent assembled coils, but the insulation sheet is partially held between the sections needing interphase insulation and thus a gap is generated by the thickness of the insulation sheet even in a section not wrapped by the insulation sheet. As a result, while the interphase insulation is ensured by the gap, the insulation material can be cut into half and the insulation sheet winding work can be made easy. The coil assembling cost can also be reduced. This can further contribute to saving of the insulation material and reduction in the coil assembling cost while the insulation sheet is placed in the section needing interphase insulation.

In the configuration (4), in the method for manufacturing a stator of a rotary electric machine described in one of (1) to (3), the insulation-sheet fixing step includes fixing the end portions of the insulation sheet to each other, the end portions being overlapped in a winding direction. Thus, the fixed end portions of the insulation sheet do not protrude out of the assembled coils. The insulation sheet does not have to be placed in a section (outside) not needing interphase insulation. Accordingly, the insulation sheet can be simply and reliably placed in the section needing interphase insulation and also contribute to saving of insulation material and reduction in coil assembling cost.

In the configuration (5), in the method for manufacturing a stator of a rotary electric machine described in one of (1) to (3), the insulation-sheet fixing step includes fixing the end portions of the insulation sheet to each other, the end portions being bent in a direction different from the winding direction and overlapped each other. Even if the sections wrapped with the insulation sheets have an uneven or indented coil shape or the sections would by the insulation sheets are slanted, the overlapped end portions of the insulation sheet can be easily fixed to each other. Accordingly, the insulation sheets can be placed in the sections needing interphase insulation even if the section(s) is hard to fix the insulation sheet. Thus, the insulation sheet can be simply and reliably placed in the section needing interphase insulation and also contribute to saving of insulation material and reduction in coil assembling cost.

In the configuration (6), in the method for manufacturing a stator of a rotary electric machine described in one of (1) to (5), the slot inserting step includes inserting the assembled coils in the slots in the axial direction of the stator core. During insertion of the stator core in the slots, therefore, the wound insulation sheet is not damaged, and coil assembling workability is also enhanced. Thus, the insulation sheet can be simply and reliably placed in the section needing interphase insulation and also contribute to saving of insulation material and reduction in coil assembling cost.

In the configuration (7), in the method for manufacturing a stator of a rotary electric machine described in (2) or (3), the insulation-sheet fixing step includes fixing the end portions of the insulation sheet overlapped in a winding direction in at least one side of the coil end portions, and the slot inserting step includes inserting the assembled coils in the slots from one side. During insertion of the stator core in the slots, therefore, the wound insulation sheet is not damaged, and coil assembling workability is also enhanced. This is because the end portions of the insulation sheet hardly protrude out of the assembled coils and thus do not interfere with the stator core and the adjacent coils. Thus, the insulation sheet can be simply and reliably placed in the section needing interphase insulation and also contribute to saving of insulation material and reduction in coil assembling cost.

In the configuration (8), in the method for manufacturing a stator of a rotary electric machine described in one of (1) to (7), the insulation sheet is formed of a base sheet and thermoplastic resin coated on a surface of the base sheet, the thermoplastic resin having a melting temperature lower than a melting temperature of the base sheet and an insulation coating covering the flat wire, and the insulation-sheet fixing step includes fixing the thermoplastic resin by welding. Accordingly, while the insulation coating of the base sheet and the insulation coating of the flat wire retain the insulation function, the insulation sheet in overlapping form can be simply and reliably fixed. Thus, the insulation sheet can be simply and reliably placed in the section needing interphase insulation and also contribute to saving of insulation material and reduction in coil assembling cost.

The apparatus for manufacturing the stator of a rotary electric machine configured as above provides the following operations and effects. In the configuration (9), the apparatus includes: an assembled-coil assembling means to assemble a plurality of adjacent in-phase cassette coils to form a set of assembled coils; an insulation sheet winding means to wind an insulation sheet cut in a predetermined shape around an outer periphery of a proximity section of a coil end portion of the assembled coils in which the cassette coils are located close to each other; an insulation sheet fixing means to fix end portions of the wound insulation sheet to each other; and a slot inserting means to overlap sets of the assembled coils in a circumferential direction of the stator core, each set being bound together by the insulation sheet having the end portions fixed to each other, and insert the assembled coils in slots of the stator core. Accordingly, the insulation sheet cut in a predetermined shape is wound and fixed around the section needing interphase insulation, and inserted in the slots, so that the insulation sheet can be simply and reliably placed in the section adjacent to the different phase and needing interphase insulation. Thus, the apparatus for manufacturing a stator of a rotary electric machine can be provided capable of contributing to saving of insulation material and reduction in coil assembling cost.

The stator of a rotary electric machine configured as above provides the following operations and effects. In the configuration (10), a plurality of adjacent in-phase cassette coils are assembled to form a set of assembled coils, an insulation sheet cut in a predetermined shape is wound around an outer periphery of a proximity section of a coil end portion of the assembled coils in which the cassette coils are located close to each other, and the coil end portion is provided with insulated portions on each of which the end portions of the insulation sheet are fixed so that the insulated portions are displaced by a slot pitch in a circumferential direction of the stator core. Accordingly, it is possible to reliably place the insulation sheet in a section in which different-phase coils are close to each other and thereby insulation breakdown is likely to occur.

Specifically, one insulated portion provided on a certain set of assembled coils and the other insulated portion provided on an adjacent set of different-phase assembled coils are arranged with a displacement in the circumferential direction of the stator. Accordingly, the one insulated portion and the other insulated portion complement each other so that the insulation sheets are placed almost all over the desired sections needing interphase insulation. Furthermore, the insulation sheets can be limited to the sections needing interphase insulation, which can reduce a use amount of the insulation material, contributing to cost reduction.

### BRIEF DESCRIPTION OF THE DRAWINGS

FIG. 1 a perspective view of a distributed winding cassette coil formed of a wound flat wire;
FIG. 2 is a perspective view of a set of assembled coils consisting of two adjacent in-phase cassette coils assembled together;
FIG. 3A is a cross sectional view of an insulation sheet taken in a longitudinal direction;
FIG. 3B is a developed diagram of the insulation sheet to be wound on horizontal portions of the assembled coils;
FIG. 3C is a developed diagram of the insulation sheet to be wound on slant portions of the assembled coils;
FIG. 3D is a developed diagram of the insulation sheet to be wound on the one-side slant portions of the assembled coils, the insulation sheet including an extended portion extending in a coil terminal direction;
FIG. 4 is a schematic cross sectional diagram to explain a coil winding step of winding the insulation sheet on an outer periphery of the assembled coils;
FIG. 5 (a) is a cross sectional view of the insulation sheet with its end portions being overlapped in a winding direction and (b) is a partial cross sectional view of a device for welding the end portions;
FIG. 6 (a) is a cross sectional view of the insulation sheet with its end portions being bent in a different direction from the winding direction and overlapped each other and (b) is a partial cross sectional view of a device for welding the end portions;
FIG. 7 is a perspective view showing a state where the insulation sheets are wound and fixed around the outer periphery of an proximity section in which coils are located close to each other in coil end portions of the assembled coils;
FIG. 8 is a perspective view showing a state where the insulation sheet having the extended portion extending in a coil terminal direction is wound and fixed around the outer periphery of the one-side slant portions of the assembled coils;
FIG. 9 is a perspective view to explain a slot inserting step of inserting a cage-shaped coil (only part thereof is illustrated) formed of the assembled coils overlapped in a circumferential direction of a stator, into the slots of a stator core in an axial direction;
FIG. 10 is a perspective view to explain a halfway state of slot insertion;
FIG. 11 is a perspective view to explain a completed state of slot insertion;
FIG. 12 is a perspective view showing a cage-shaped coil (only part thereof is illustrated) including the assembled coils bound with the insulation sheets having fixed end portions so that the bound assembled coils are located on alternate set; and
FIG. 13 is a perspective view showing a cage-shaped coil (only part thereof is illustrated) including the assembled coils with the insulation sheets wound and fixed thereon with the extended portions extended in the coil terminal direction so that the assembled coils attached with the insulation sheets are located on alternate set.

### MODE FOR CARRYING OUT THE INVENTION

### (First Embodiment)

A detailed description of a first embodiment of a stator of a rotary electric machine, a manufacturing method thereof and a manufacturing apparatus thereof embodying the present invention will now be given referring to the accompanying drawings.

The following explanation is made in detail, in order of steps, on an assembled-coil assembling step of assembling two adjacent in-phase cassette coils together as a set of assembled coils, an insulation-sheet winding step of winding an insulation sheet around an outer periphery of an proximity section of the assembled coils in which the cassette coils are located close to each other, the insulation sheet being formed by cutting in a predetermined shape, an insulation-sheet fixing step of fixing end portions of the wound insulation sheet, and a slot inserting step of overlapping the assembled coils, each bound together with the insulation sheets having the fixed end portions, in a circumferential direction of a stator, and inserting the assembled coils in slots of a stator core in an axial direction of the stator core. A stator of a rotary electric machine and an apparatus for manufacturing the same are also explained in the process of each step.

### <Assembled-coil assembling step>

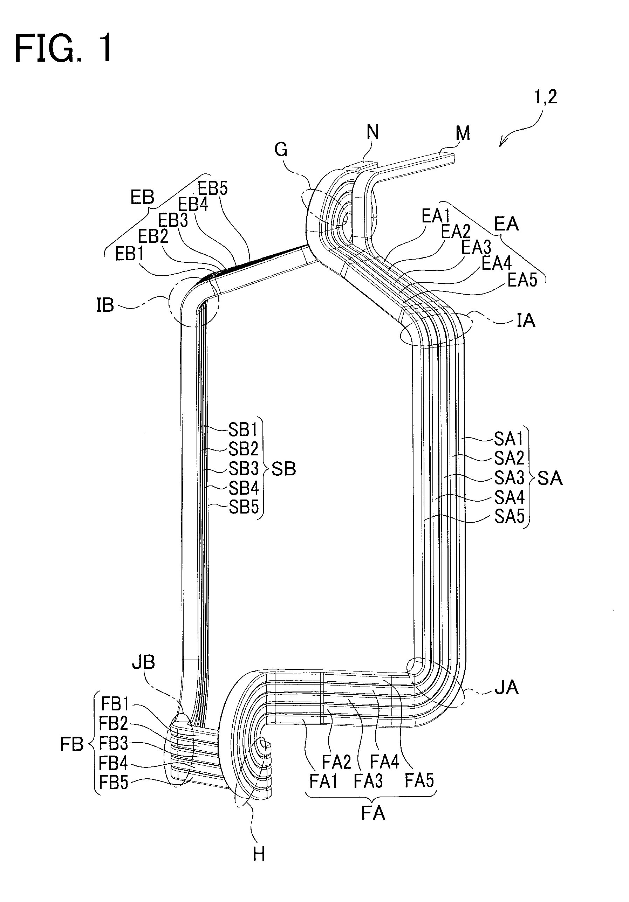

The step of assembling two adjacent interphase cassette coils to form a set of assembled coils will be first explained, beginning with the explanation of the cassette coils constituting the assembled coils. FIG. 1 is a perspective view of cassette coils 1 and 2 each formed of a flat wire wound in a distributed winding form.

As shown in FIG. 1, each of the cassette coils 1 and 2 includes in-slot wire portions SA and SB to be placed in slots of a stator core 7, slant portions EA and EB connecting the in-slot wire portions SA and SB on an upper side of the stator core 7 in the axial direction, an upper concentric turn portion G located at the midpoint of the slant portions EA and EB, horizontal portions FA and FB connecting the in-slot wire portions SA and SB on a lower side of the stator core 7 in the axial direction, and a lower concentric turn portion H located at the midpoint of the horizontal portions FA and FB.

The in-slot wire portion SA on the right side in the figure includes five flat rectangular conductor wire ("flat wire") stacked with respective long side surfaces (flatwise surfaces) contacting each other. This forms a stacked assembly of a first in-slot wire portion SA1, a second in-slot wire portion SA2, a third in-slot wire portion SA3, a fourth in-slot wire portion SA4, and a fifth in-slot wire portion SA5 located in this order from the radial outside of the stator core 7.

The in-slot wire portion SB on the left side in the figure includes five flat wire stacked with their long side surfaces (flatwise surfaces) contacting each other. This forms a stacked assembly of a first in-slot wire portion SB1, a second in-slot wire portion SB2, a third in-slot wire portion SB3, a fourth in-slot wire portion SB4, and a fifth in-slot wire portion SB5 located in this order from the radial inside of the stator core 7. The right-side in-slot wire portion SA and the left-side in-slot wire portion SB in the figure are reversed in the stacking order as above.

At an upper end of the right-side in-slot wire portion SA, an upper curved portion IA is formed to bend left obliquely upward along the circumferential direction of the stator core 7 and are further continuous with the slant portion EA. The slant portion EA also includes five flat wires stacked with their long side surfaces (flatwise surfaces) contacting each other. This forms a staked assembly of a first slant portion EA1, a second slant portion EA2, a third slant portion EA3, a fourth slant portion EA4, a fifth slant portion EA5 located in this order from the radial outside of the stator core 7.

At an upper end of the left-side in-slot wire portion SB, an upper curved portion IB is formed to bend right obliquely upward along the circumferential direction of the stator core 7 and are further continuous with the slant portion EB. The slant portion EB also includes five flat wires stacked with their long side surfaces (flatwise surfaces) contacting each other. This forms a stacked assembly of a first slant portion EB 1, a second slant portion EB2, a third slant portion EB3, a fourth slant portion EB4, and a fifth slant portion EB5 located in this order from the radial inside of the stator core 7.

At an upper end of the first slant portion EA1 on the right side in the figure, a terminal portion M is formed to extend upward and protrude horizontally toward radially outward of the stator core 7. At an upper end of the fifth slant portion EB5 on the left side in the figure, a terminal portion N is formed to extend upward and protrude horizontally toward radially outward of the stator core 7. Herein, the terminal portion M protrudes outward more than the terminal portion N. The second slant portion EA2, third slant portion EA3, fourth slant portion EA4, and fifth slant portion EA5 on the right side in the figure are respectively continuous with the first slant portion EB 1, second slant portion EB2, third slant portion EB3, fourth slant portion EB4 on the left side in the figure via the upper concentric turn portion G curved in a concentric semicircular shape and located between the terminal portion M and the terminal portion N. Since the slant portions are turned 180° at the upper concentric turn portion G, the stacking order of the right-side slant portion FA and the left-side slant portion FB are reversed.

At a lower end of the right-side in-slot wire portion SA, a lower curved portion JA is formed to bend 90° toward the radially inward of the stator core 7 and be further continuous with the horizontal portion FA. Accordingly, the horizontal portion FA includes five flat wires stacked with their long side surfaces (flatwise surfaces) contacting each other. This forms a stacked assembly of a first horizontal portion FA1, a second horizontal portion FA2, a third horizontal portion FA3, a fourth horizontal portion EA4, a fifth horizontal portion EA5 located in this order from a lower side in the axial direction of the stator core 7.

Furthermore, at a lower end of the left-side in-slot wire portion SB, a lower curved portion JB is formed to bend 90° toward radially inward of the stator core 7 and be further continuous with the horizontal portion FB. Accordingly, the horizontal portion FB includes five flat wires stacked with their long side surfaces (flatwise surfaces) contacting each other. This forms a stacked assembly of a first horizontal portion FA1, a second horizontal portion FA2, a third horizontal portion FA3, a fourth horizontal portion EA4, a fifth horizontal portion EA5 located in this order from an upper side in the axial direction of the stator core 7.

The first horizontal portion FA1, second horizontal portion FA2, third horizontal portion FA3, fourth horizontal portion FA4, and fifth horizontal portion FA5 on the right side in the figure are respectively continuous with the first horizontal portion FB1, second horizontal portion FB2, third horizontal portion FB3, fourth horizontal portion FB4, and fifth horizontal portion FB5 on the left side in the figure via the lower concentric turn portion H curved in a concentric semicircular shape. Since the horizontal portions are turned 180° at the lower concentric turn portion H, the stacking order of the right-side horizontal portion FA and the left-side horizontal portion FB are reversed.

Each of the cassette coils 1 and 2 is produced as above by bending a single flat wire continuous from the terminal portion M to the terminal portion N to form the in-slot wire portions SA and SB, the slant portions EA and EB, the horizontal portions FA and FB, the upper concentric turn portion G, and the lower concentric turn portion H.

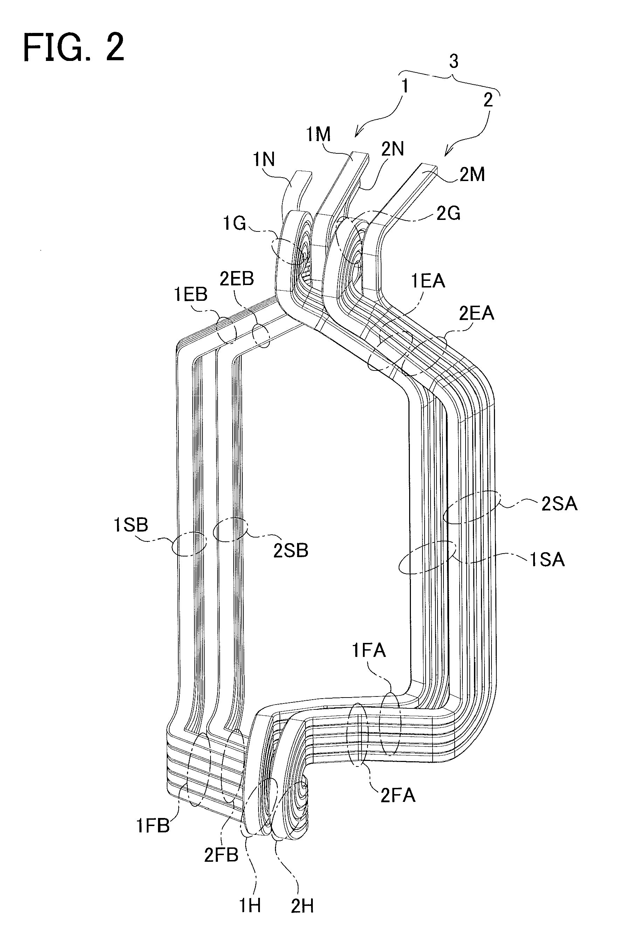

A set of assembled coils 3 will be explained below. FIG. 2 is a perspective view of one set of assembled coils 3 made up of two adjacent in-phase cassette coils 1 and 2.

As shown in FIG. 2, the assembled coils 3 consist of two cassette coils 1 and 2 placed in overlapping relation in the circumferential direction of the stator core 7. In-slot wire portions 1SA and 2SA on the right side in the figure are spaced at an interval of adjacent slots (hereinafter, referred to as a "slot pitch") in the circumferential direction. In-slot wire portions 1SB and 2SB on the left side in the figure are also spaced at the slot pitch. Accordingly, slant portions 1EA and 1EB of the cassette coil 1 are displaced from slant portions 2EA and 2EB of the cassette coil 2 by the slot pitch along the slant surfaces. The right-side slant portion 1EA is overlapped under the slant portion 2EA, while the left-side slant portion 1EB is overlapped on the slant portion 2EB. In a section where the coils overlap each other, the cassette coils 1 and 2 are located close or adjacent to each other. This proximity section includes a section in which the coils contact each other.

Horizontal portions 1FA and 1FB of the cassette coil 1 are displaced by a slot pitch from horizontal portions 2FA and 2FB of the cassette coil 2 along the horizontal surfaces. The right-side horizontal portion 1FA is overlapped in the rear of the horizontal portion 2FA in the figure, while the left-side horizontal portion 1EB is overlapped in the front of the horizontal portion 2EB. In a section where the coils overlap each other, the cassette coils 1 and 2 are located close or adjacent to each other. The proximity section includes a section in which the coils contact each other.

The terminal portion 1M of the cassette coil 1 and the terminal portion N of the cassette coil 2 are overlapped in the axial direction of the stator core 7 and electrically joined as the in-phase assembled coils 3.

As above, one set of the assembled coils 3 consists of two cassette coils 1 and 2 assembled in overlapping relation in the circumferential direction of the stator core 7, so that the slant portions 1EA and 2EA, the slant portions 1EB and 2EB, the horizontal portions 1FA and 2FA, and the horizontal portions 1FB and 2FB are each located in adjacent relation.

### <Insulation sheet winding step>

A next explanation is made on a step of winding insulation sheets 4, 5, and 6, each cut into a predetermined shape, around an outer periphery of each proximity section of the assembled coils 3 in which the cassette coils 1 and 2 are close to each other.

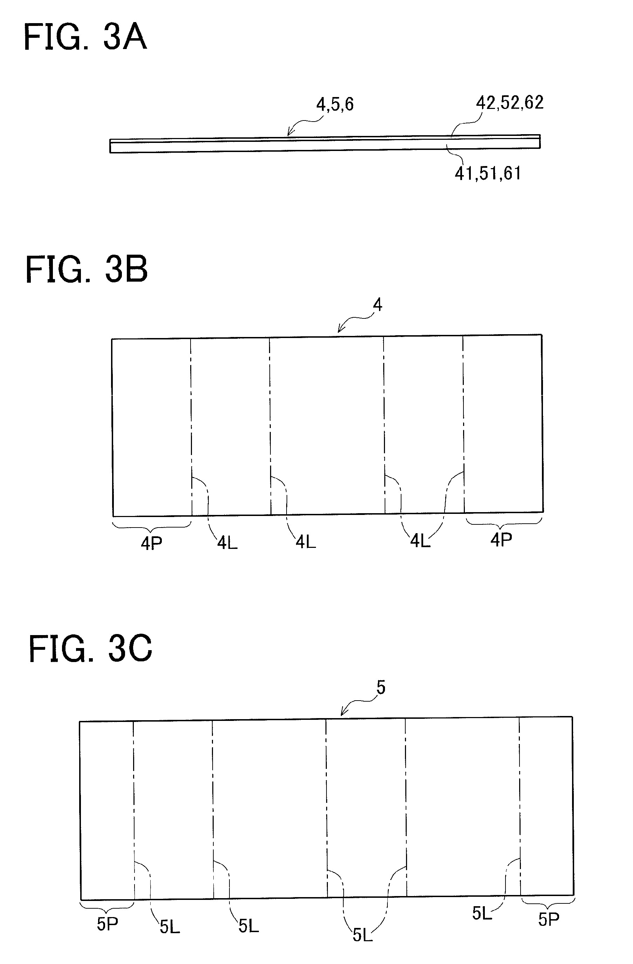

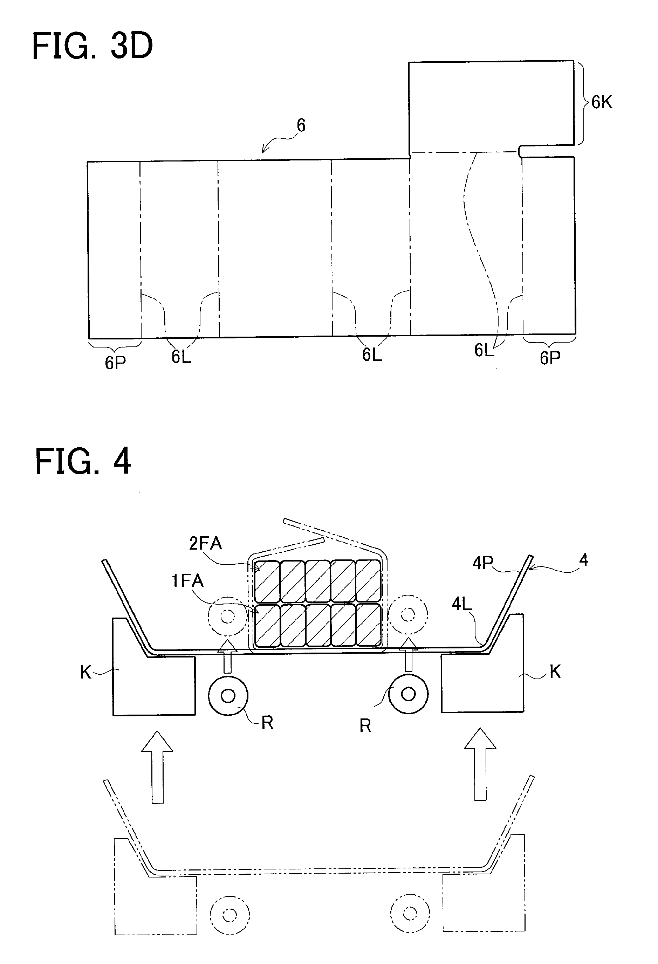

The structure of each developed shape of the insulation sheet 4, 5, and 6 is first explained. FIG. 3A is a cross sectional view of the insulation sheet taken in a longitudinal direction, FIG. 3B is a developed view of the insulation sheet to be wound on the horizontal portion of the assembled coils, FIG. 3C is a developed view of the insulation sheet to be wound on the slant portion of the assembled coils, and FIG. 3D is a developed view of the insulation sheet to be wound on one-side slant portion of the assembled coils, the insulation sheet having an extended portion extending in a direction toward a terminal portion of a coil.

As shown in FIG. 3A, the insulation sheet 4, 5, or 6 is a sheet including a base sheet 41, 51, or 61 made of for example meta-based aramid fiber and so on having high electrical insulation property and high heat resistance property and a thermoplastic resin film 42, 52, or 62 made of for example polyethylene terephthalate bonded on the surface of the base sheet 41, 51, or 61. Preferably, a melting temperature of the thermoplastic resin films 42, 52, and 62 is equal to or lower than a melting temperature of the base sheets 41, 51, and 61 and a melting temperature of an insulation coating of the flat wire. This is to avoid degradation of the base sheets 41, 51, and 61 and the insulation coating due to a temperature rise when the insulation sheets 4, 5, and 6 are fixed by welding. It is to be noted that each insulation sheet 4, 5, and 6 has a thickness of about 0.15 to about 0.3 mm.

As shown in FIGs. 3B and 3C, the developed shapes of the insulation sheets 4 and 5 are determined according to a cross sectional shape of the section of the assembled coils 3 on which the insulation sheet is to be wound, and is generally rectangular. On both ends of each of the insulation sheets 4 and 5, end portions 4P or 5P in the longitudinal direction are provided to be used as lap allowance when wound. The width of each end portion 4P and 5P is set to at least about 10 mm in the case of fixing the insulation sheet by welding even though a smaller width can save a material cost.

FIG. 3B illustrates the insulation sheet 4 to be wound on the right-side horizontal portions 1FA and 2FA and the left-side horizontal portions 1FB and 2FB of the assembled coils 3 in the figure, specifically, wound on each area in which the two cassette coils 1 and 2 are overlapped in horizontal state. In this winding area, two stacked assemblies each having a rectangular cross section are arranged horizontally, taking a rectangular shape as a whole. Thus, a winding work thereof is easy. The developed shape of the insulation sheet 4 is therefore designed to overlap the end portions 4P in the winding direction.

FIG. 3C illustrates the insulation sheet 5 to be wound on the right-side slant portions 1EA and 2EA and the right-side slant portions 1EB and 2EB in the figure, specifically, wound on each area in which the two cassette coils 1 and 2 are overlapped in oblique state. In this winding area, two stacked assemblies each having a rectangular cross are arranged obliquely, so that they are displaced (misaligned) in cross section. Thus, a winding work thereof is not always easy. The developed shape of the insulation sheet 5 is therefore designed to overlap the end portions 5P folded in the different direction from the winding direction.

FIG. 3D illustrates the insulation sheet 6 to be wound on the right-side slant portions 1EA and 2EA of the assembled coils 3 in the figure. The insulation sheet 6 has an extended portion 6K extending toward the coil terminal portion 2M. This developed shape corresponds to a combination of the developed shape shown in FIG. 3C and the extended portion 6K. At the same time when the insulation sheet 6 is wound on the slant portion 1EA and 2EA, the extended portion 6K stands up along the coil terminal portion 2M.

Each of the insulation sheets 4, 5, and 6 having the above developed shapes is made in a manner that a corresponding part is cut out from an insulation material wound in a coil shape by a press die or the like into a sheet form. In each of the insulation sheets 4, 5, and 6 in developed shape, there are fold lines 4L, 5L, and 6L to be formed respectively when the insulation sheets 4, 5, and 6 are bent or folded. Specifically, the insulation sheet 4 in FIG. 3B has four fold lines, the insulation sheet 5 in FIG. 3C has five fold lines and the insulation sheet 6 in FIG. 3D has six fold lines. The insulation sheets 4, 5, and 6 may also be folded preliminarily along those fold lines. This previously folding makes it easy to position the insulation sheets 4, 5, and 6 in the respective winding step and thus can improve winding accuracy.

A method for winding the insulation sheets 4, 5, and 6, cut into respective predetermined developed shapes, around the outer periphery of corresponding proximity sections in which the cassette coils 1 and 2 are located close to each other. FIG. 4 is a schematic cross sectional view to explain the coil winding step of winding the insulation sheet 4 on the outer periphery of the assembled coils 3.

As shown in FIG. 4, the insulation sheet 4 having been preliminary folded along the fold lines 4L is put on a transfer table K. This table K is moved upward in the figure in response to a signal from a work detecting sensor not shown and then stopped when reaches a coil winding position. The transfer table K is provided with winding rollers R that are lifted up and down by a driving cylinder not shown to wind the insulation sheet 4 around the horizontal portions 1FA and 2FA. When the transfer table K is stopped, the rollers R are further moved upward along vertical walls of the horizontal portions 1FA and 2FA to fold the insulation sheet 4 into contact with the vertical walls of the horizontal portions 1FA and 2FA. Since the end portions 4P of the insulation sheet 4 have been preliminarily folded along the fold lines 4L, the insulation sheet 4 is folded along the vertical walls to be wound on the upper surface of the coils, so that the end portions 4P are overlapped each other. Thereafter, the transfer table K is moved down at the same time when the winding rollers R are moved down, returning to respective original positions. As above, the insulation sheet 4 is wound on the outer periphery of the proximity section in which the cassette coils 1 and 2 are located close to each other.

FIG. 4 illustrates a typical example of the method for overlapping the end portions 4P of the insulation sheet 4 in the winding direction. When the end portions are to be overlapped in a different direction from the winding direction, the preliminarily folding direction of the end portions 5P of the insulation sheet 5 shown in FIG. 3C has only to be changed. To be concrete, the preliminary folding of the right side in FIG. 4 is performed by two-stage folding into a crank-like shape and the preliminary folding of the left side is eliminated. This can facilitate a winding work using the above transfer table K and winding rollers R.

When the insulation sheet 6 including the extended portion 6K shown in FIG. 3D is to be wound, the insulation sheet 6 is folded in advance along the fold line 6L at the root of the extended portion 6K to allow the extended portion 6K to extend along the terminal portion 2M. Thereby, the extended portion 6K is made standing up at the same time when the insulation sheet 6 is wound by use of the transfer table K and the winding rollers R.

The above explanation is made on the case of preliminary folding of the insulation sheets 4, 5, and 6 along part of the fold lines prior to winding. However, the insulation sheets can also be wound without preliminary folding. This case can be achieved by increasing the number of winding rollers or changing the winding rollers to a double-axis driven type roller.

### <Insulation sheet fixing step>

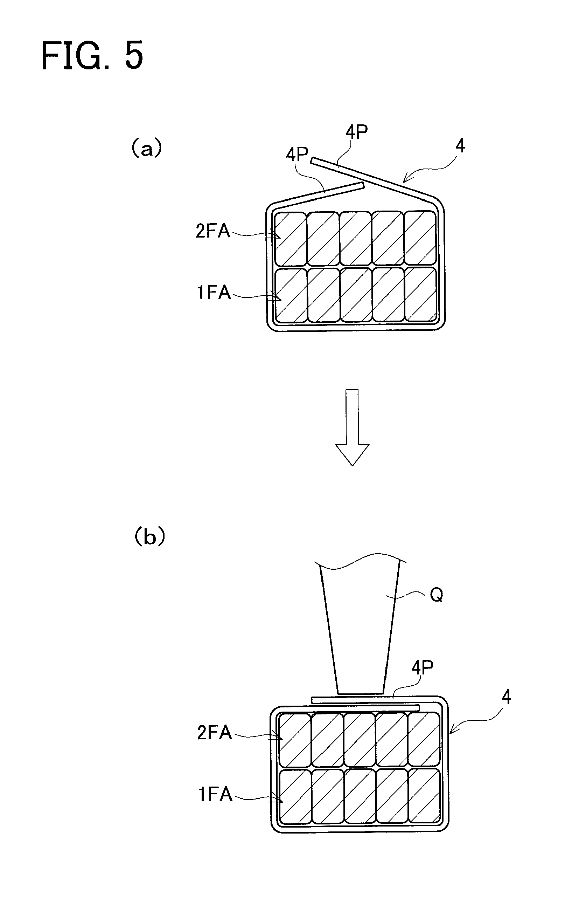

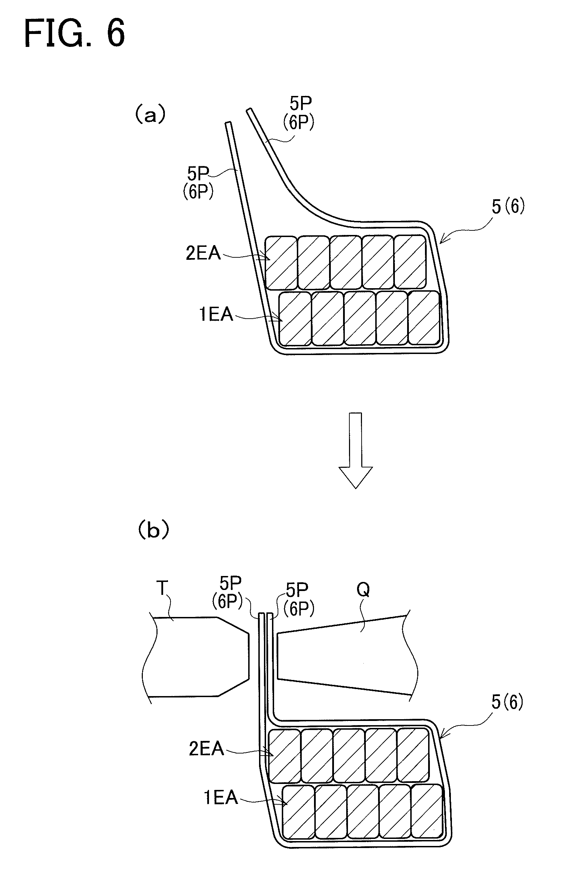

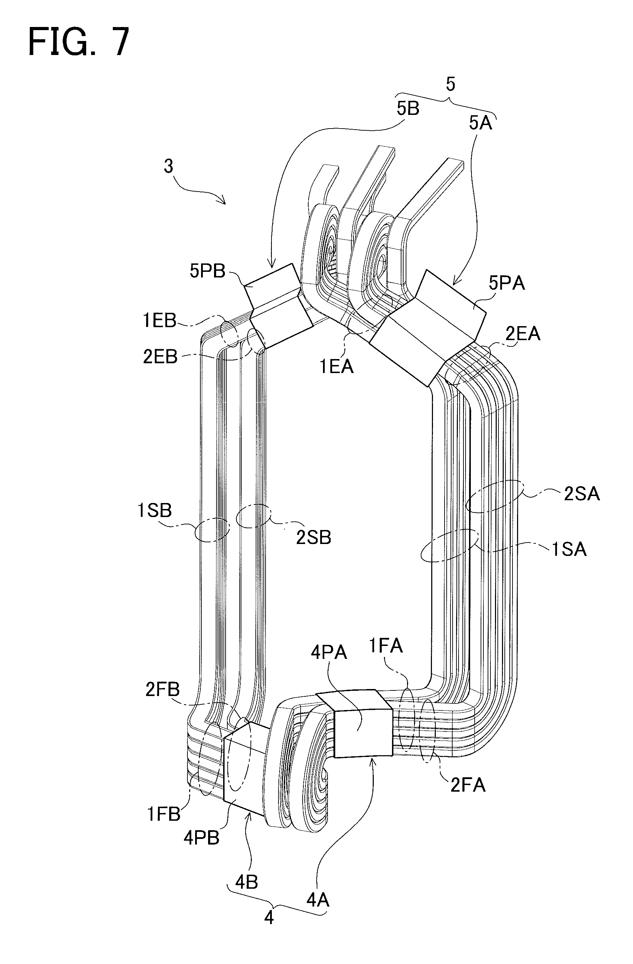

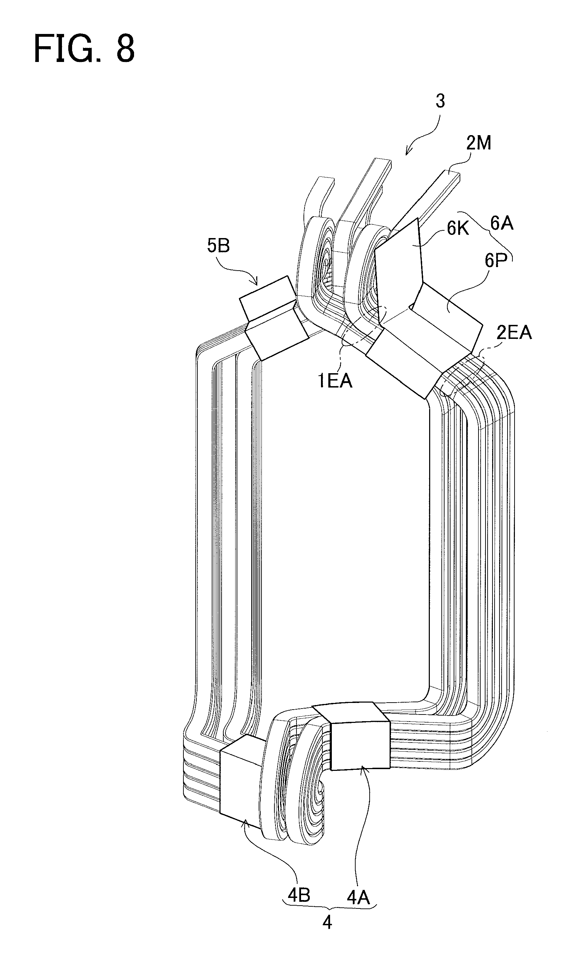

A step of fixing the end portions of the wound insulation sheets 4, 5, and 6 will be explained below. In FIG. 5, (a) illustrates a cross sectional view of the insulation sheet 4 with the end portions 4P being overlapped in the winding direction and (b) illustrates a partial cross sectional view of a device for welding and fixing the end portions 4P. In FIG. 6, (a) illustrates a cross sectional view of the insulation sheet 5 or 6 with the end portions 5P or 6P bent in the different direction from the winding direction and overlapped and (b) illustrates a partial cross sectional view of a device for welding and fixing the end portions 5P or 6P to each other. FIG. 7 shows a state where the insulation sheets 4 and 5 are wound and fixed around the outer periphery of the proximity sections in which the coils are located close to each other in the coil end portions of the assembled coils 3. FIG. 8 shows a state where the insulation sheet 6A having the extended portion 6K extending toward the terminal portion 2M is wound and fixed around the right-side slant portions 1EA and 2EA of the assembled coils 3.

In the above insulation-sheet winding step, the insulation sheets 4, 5, and 6 are wound on the coils as shown in FIG. 5(a) or 6(a). The end portions 4P, 5P, and 6P of the wound insulation sheets 4, 5, and 6 are fixed by use of the fixing device. A method for fixing the end portions 4P, 5P, and 6P is selectable from various techniques such as bonding, riveting, and welding. In the present embodiment, a simple and reliable welding method using ultrasonic vibration is employed. The frequency of ultrasonic vibration is about 40 kHz.

As shown in FIG. 5(b), the welding using ultrasonic vibration is performed in a manner that the end portions overlapped each other are pressed by a tip of an ultrasonic horn Q to press against the coil stacked assemblies, and then ultrasonic wave is irradiated thereto for several seconds. Frictional heat is generated between the end portions 4P of the insulation sheet 4, thereby melting the thermoplastic resin film 42 bonded to the base sheet 41, so that the end portions 4P are welded to each other. Since the welding heat generated is concentrated on between the end portions 4P, damage which may be imparted on the insulation coating (enamel) of the flat wire is less than the case of thermal welding using a welder.

The device in FIG. 6 (b) is configured to weld, by ultrasonic vibration, the end portions 5P or 6P bent in the direction different from the winding direction and overlapped each other. Specifically, the end portions bent about 90° in the direction different from the winding direction of the insulation sheet 5 or 6 and overlapped each other are clamped by the tip of the ultrasonic horn Q and a backing metal T and subjected to irradiation of ultrasonic wave for several seconds. In this case, similarly, frictional heat is generated between the end portions 5P of the insulation sheet 5 or between the end portions 6P of the insulation sheet 6, thereby melting the thermoplastic resin film 52 or 62 bonded to the base sheet 51 or 61, so that the melted end portions are welded to each other. It is to be noted that the insulation coating (enamel) of the flat wire is hardly damaged.

As shown in FIG. 7, the insulation sheets 4 and 5 are respectively wound and fixed by welding around the right-side horizontal portions 1FA and 2FA and the left-side horizontal portions 1FB and 2FB, and around the right-side slant portions 1EA and 2EA and the left-side slant portions 1EB and 2EB. In the horizontal portions, overlapped end portions 4PA and 4PB do not protrude outside. In the slant portions, on the other hand, overlapped end portions 5PA and 5PB are protruded outside in the axial direction of the stator core 7. The insulation sheets 4 and 5 are wound around almost linearly extending parts of the flat wires of the cassette coils 1 and 2 in each horizontal portion and each slant portion. However, they do not need to be wound around the whole ranges of the almost linearly extending portions. This is because they are complemented by the insulation sheets of the different-phase assembled coils adjacently placed as described later.

As shown in FIG. 8, the insulation sheet 6 is wound and fixed by welding around the right-side slant portions 1EA and 2EA and the extended portion 6K of the insulation sheet 6 stands up along the terminal portion 2M.

### <Slot inserting step>

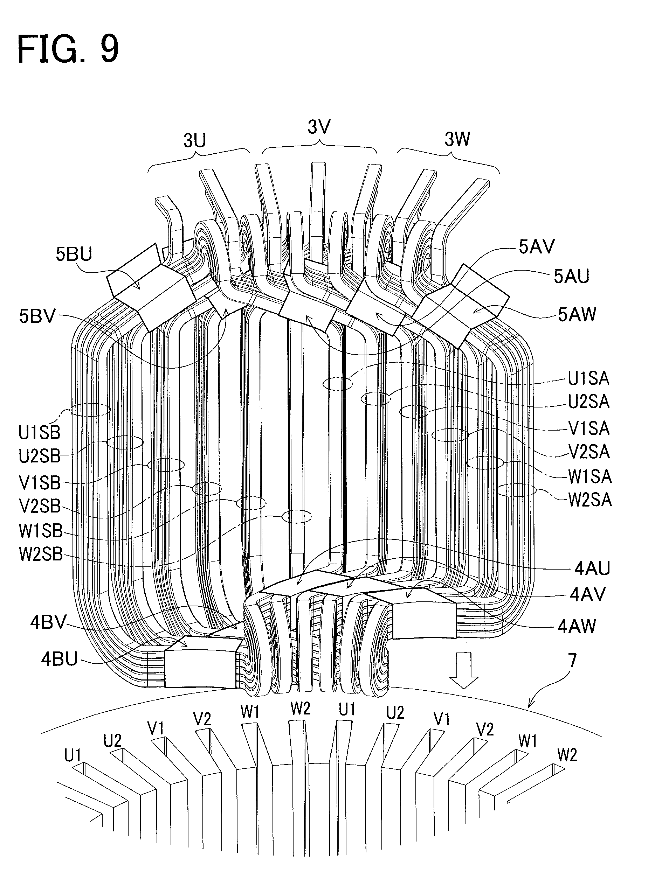

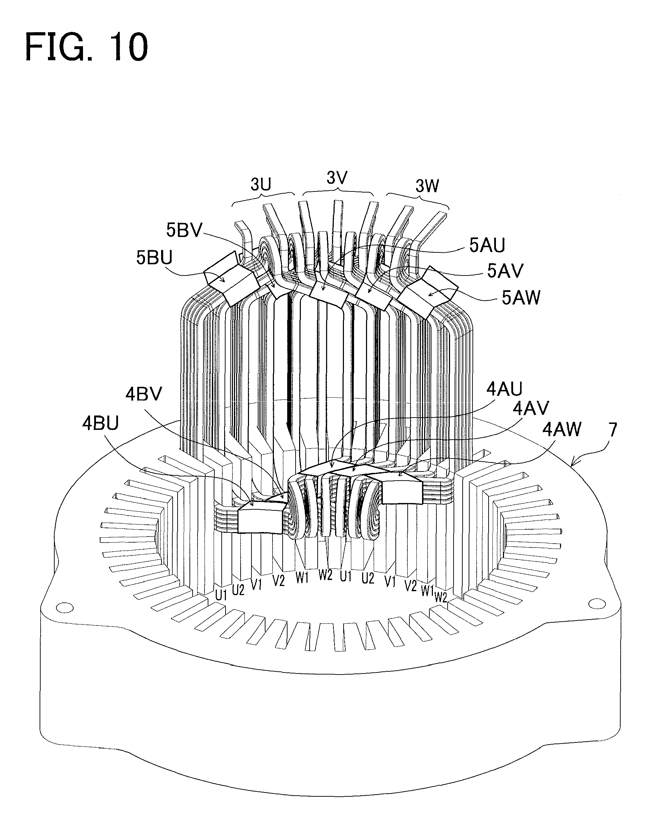

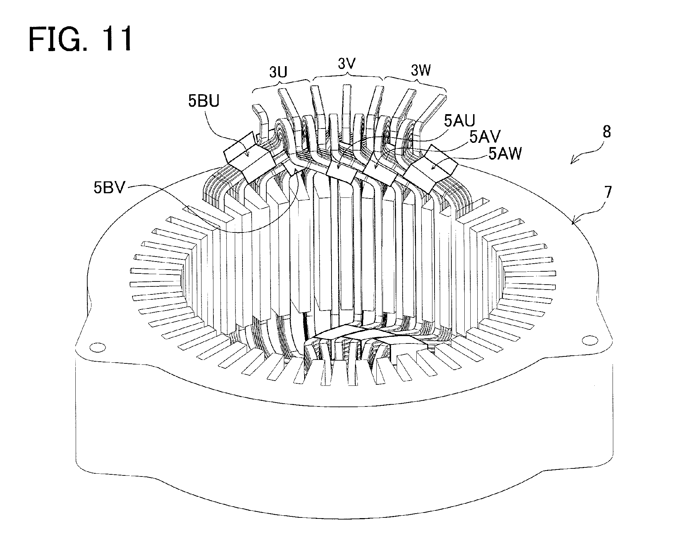

Next, an explanation is made on a step of arranging the assembled coils 3, which are tied together by the insulation sheets 4, 5, and 6 with respective end portions 4P, 5P, and 6P fixed, in an overlapping relation in the circumferential direction of the stator core 7, and then inserting the assembled coils 3 in the slots of the stator core 7 in the axial direction of the stator core 7. FIG. 9 is a perspective view to explain the slot inserting step of inserting a cage-shaped coil (only part thereof is illustrated) formed of the assembled coils 3 overlapped in the circumferential direction of the stator core 7, axially into the slots of the stator core 7. FIG. 10 is a perspective view to explain a halfway state of the slot insertion work. FIG. 11 is a perspective view to explain a completed state of the slot insertion work.

As shown in FIG. 9, sets of assembled coils 3U, 3V, and 3W are arranged in the order of a U phase, a V phase, and a W phase in overlapping relation with a displacement from each other by a slot pitch in the circumferential direction of the stator core 7. For example, in the forty-eight three-phase rotary electric machine, having sixteen poles for each of the U phase, V phase, and W phase, the sets of assembled coils 3U, 3V, and 3W are required by four sets per phase. Thus, total twelve sets of assembled coils constitute a cage-shaped coil (not shown) having a nearly cylindrical shape. For facilitating explanation, FIG. 9 illustrates only each one of the sets of assembled coils 3U, 3V, and 3W of the U phase, V phase, and W phase are arranged. As shown in FIG. 9, the U-phase assembled coils 3U, the V-phase assembled coils 3V, and the W-phase assembled coils 3W are overlapped clockwise in the circumferential direction of the stator core 7.

Accordingly, an insulation sheet 5AU wound and fixed around the slant portion of the U-phase assembled coils 3U, an insulation sheet 5AV wound and fixed around the slant portion of the V-phase assembled coils 3V, and an insulation sheet 5AW wound and fixed around the slant portion of the W-phase assembled coils 3W are placed in proximity sections close to the slant portions of respective adjacent different-phase assembled coils.

For instance, the insulation sheet 5AU wound and fixed around the right-side slant portions of the U-phase assembled coils 3U in the figure is held in an proximity section close to the right-side slant portions of the adjacent V-phase assembled coils 3V to serve for interphase insulation between the U and V phases. On the other hand, the insulation sheet 5AV wound and fixed around the right-side slant portions of the V-phase assembled coils 3V is held in an proximity section close to the right-side slant portions of the U-phase assembled coils 3U and in a position displaced from the insulation sheet 5AU by a slot pitch clockwise in the circumferential direction of the stator core 7 to serve for interphase insulation between the U and V phases. Similarly, the insulation sheet 5AV wound and fixed around on the right-side slant portions of the V-phase assembled coils 3V is held in an proximity section close to the right-side slant portions of the W-phase assembled coils 3W to serve for interphase insulation between the V and W phases. On the other hand, the insulation sheet 5AW wound and fixed around the right-side slant portions of the W-phase assembled coils 3W is held in an proximity section close to the right-side slant portions of the V-phase assembled coils 3V and in a position displaced from the insulation sheet 5AV by a slot pitch clockwise in the circumferential direction of the stator core 7 to serve for interphase insulation between the V and W phases.

Further, an insulation sheet 4AU wound and fixed around the horizontal portions of the U-phase assembled coils 3U, an insulation sheet 4AV wound and fixed around the horizontal portions of the V-phase assembled coils 3V, and an insulation sheet 4W wound and fixed around the horizontal portions of the W-phase assembled coils 4W are placed in areas close to the horizontal portions of respective adjacent different-phase assembled coils.

For instance, the insulation sheet 4AU wound and fixed around the right-side horizontal portions of the U-phase assembled coils 3U is held in an proximity section close to the right-side horizontal portions of the adjacent V-phase assembled coils 3V to serve for interphase insulation between the U and V phases. On the other hand, the insulation sheet 4AV wound and fixed around the right-side horizontal portions of the V-phase assembled coils 3V is held in an proximity section close to the right-side horizontal portions of the U-phase assembled coils 3U and in a position displaced from the insulation sheet 4AU clockwise by a slot pitch in the circumferential direction of the stator core 7 to serve for interphase insulation between the U and V phases. Similarly, the insulation sheet 4AV wound and fixed around the right-side horizontal portions of the V-phase assembled coils 3V is held in an proximity section close to the right-side horizontal portions of the adjacent W-phase assembled coils 3W to serve for interphase insulation between the V and W phases. On the other hand, the insulation sheet 4AW wound and fixed around the right-side horizontal portions of the W-phase assembled coils 3W is held in an proximity section close to the right-side horizontal portions of the V-phase assembled coils 3V and in a position displaced from the insulation sheet 4AV clockwise in the circumferential direction of the stator core 7 to serve for interphase insulation between the V and W phases.

As above, one insulation sheet wound around the assembled coils of a certain phase and another insulation sheet wound around an adjacent set of the assembled coils of a different phase are displaced in the circumferential direction of the stator core 7. Thus, one insulation sheet and the other insulation sheet complement each other, so that the insulation sheets are placed almost all over the sections needing interphase insulation.

When the sets of assembled coils 3U, 3V, and 3W are arranged in one circle in the order of the U phase, V phase, and W phase with a displacement by a slot pitch from each other in the circumferential direction of the stator core 7, the nearly cylindrical cage-shaped coil (not shown) is formed in which the assembled coils 3U, 3V, and 3W are arranged in overlapping relation. This cage coil is axially inserted after in-slot wire portions U1SA, U2SA, V1SA, V2SA, W1SA, W2SA, and others of the assembled coils 3U, 3V, and 3W are respectively aligned with the corresponding slots U1, U2, V1, V2, W1, W2, and others of the stator core 7. At that time, the cage coil is retained by a coil holder not shown to prevent positional displacement.

As shown in FIG. 10, the horizontal portions of the assembled coils 3U, 3V, and 3W are located more inside than the inner periphery of the stator core 7. Thus, the insulation sheets 4AU, 4AV, 4AW, 4BU, 4BV, and others wound and fixed around the horizontal portions do not interfere with the stator core 7 in the course of insertion of the cage coil in the stator core 7. As shown in FIG. 11, furthermore, the slant portions of the assembled coils 3U, 3V, and 3W are located above the upper end of the stator core 7 after the assembled coils 3U, 3V, and 3W are completely inserted in the stator core 7. Accordingly, the insulation sheets 5AU, 5AV, 5AW, 5BU, 5BV, and others wound and fixed around the slant portions, inclusive of the fixedly welded end portions, do not interfere with the stator core 7. After completion of insertion of the assembled coils 3U, 3V, and 3W in the stator core 7, resin molding and wiring of terminal portions are performed. A stator 8 is thus completed.

### <Operations and Effects>

As explained in detail above, the method for manufacturing the stator 8 of a rotary electric machine according to the present embodiment includes the assembled-coil assembling step of assembling the adjacent two in-phase cassette coils 1 and 2 to form a set of assembled coils 3, and the insulation-sheet winding step of winding the insulation sheets 4, 5, and 6, each cut into a predetermined shape, around the outer periphery of the proximity sections in which the cassette coils 1 and 2 of the assembled coils 3 are located close to each other. Accordingly, the insulation sheets 4, 5, and 6 can be reliably placed in the sections needing interphase insulation.

To be concrete, when the two adjacent in-phase cassette coils 1 and 2 are assembled together to form one set of assembled coils 3, another set of assembled coils 3 of the different phase is arranged adjacent to the former set of assembled coils 3 in the end portion. In the case of a three-phase rotary electric machine, for example, assuming that one set of assembled coils 3U is the U phase, the V-phase assembled coils 3V is arranged adjacently thereto, and the W-phase assembled coils 3W is arranged further adjacently. This arrangement is repeated. Herein, the cassette coils 1 and 2 have the same shape and area arranged in overlapping relation in the circumferential direction of the stator core 7. Thus, the proximity section of the in-phase cassette coils 1 and 2 also corresponds to a proximity section close to different-phase cassette coils.

Therefore, when the two adjacent in-phase cassette coils 1 and 2 are assembled to form one set of assembled coils 3 and the insulation sheets 4, 5, and 6 each cut in a predetermined shape are wound around the outer periphery of the proximity sections in which the cassette coils 1 and 2 of the assembled coils 3 are close to each other, the insulation sheets 4, 5, and 6 are held in the proximity sections close to the different-phase assembled coils. Thus, the insulation sheets 4, 5, and 6 can be reliably placed in the sections in which different-phase coils are close to each other and apt to insulation breakdown. In other words, it is possible to simply and reliably place the insulation sheets 4, 5, and 6 in the sections needing interphase insulation. Since the insulation sheets 4, 5, and 6 can be limited to the sections needing interphase insulation, a use amount of the insulation material can be reduced, which contributes to cost reduction. Although no insulation sheet is held between the in-phase coils, no electric potential is generated between the in-phase coils and thus insulation breakdown does not occur even if the coils are close to each other.

Moreover, the present embodiment includes the insulation-sheet fixing step of fixing the end portions 4P, 5P, and 6P of the wound insulation sheets 4, 5, and 6. These wound insulation sheets 4, 5, and 6 can tie or bind together the in-phase cassette coils 1 and 2 as one set of assembled coils 3. Accordingly, the bound assembled coils 3 can be carried with no danger of displacing, and be inserted in the stator core 7. Even after the assembled coils 3 is inserted in the slots of the stator core 7, the end portions 4P, 5P, and 6P of the insulation sheets 4, 5, and 6 remain fixed. Thus, the insulation sheets 4, 5, and 6 are less likely displaced from the desired areas.

The present embodiment includes the slot inserting step in which the assembled coils 3 bound together by the fixed end portions 4P, 5P, and 6P of the insulation sheets 4, 5, and 6 are overlapped in the circumferential direction of the stator core 7 and thereafter inserted in the slots of the stator core 7 in the axial direction of the stator core 7. Thus, the insulation sheets 4, 5, and 6 are wound and fixed around the coils prior to insertion of the coils in the slots. In this method, differently from the method in which the coils are inserted in the slots of the stator core 7 and thereafter insulation sheets 4, 5, and 6 are wound, the insulation sheets 4, 5, and 6 can simply and reliably insulate the desired areas without being caught in narrow gaps between the different-phase coils placed close to each other.

In the present embodiment, the insulation-sheet winding step is performed by winding the insulation sheets 4, 5, and 6 around the sections of the coil end portion of the assembled coils 3 close to the coil end portions of the adjacent different-phase coils. The insulation material can therefore be wound by a minimum size around the desired sections. Specifically, one insulation sheets 4, 5, and 6 around certain assembled coils and the other insulation sheets 4, 5, and 6 wound around adjacent different-phase assembled coils are arranged, in one proximity section, with a displacement in the circumferential direction of the stator core 7. Accordingly, the one insulation sheets 4, 5, and 6 and the other insulation sheets 4, 5, and 6 complement each other, so that the insulation sheets 4, 5, and 6 can be placed almost all over the desired sections needing interphase insulation. Because of the coil end portions, the insulation sheets 4, 5, and 6 can be wound around the sections in which the two cassette coils 1 and 2 are close to each other and provide a nearly rectangular cross section as a whole.

In the present embodiment, the insulation-sheet fixing step for the horizontal portions of the coils is performed by fixing the end portions 4P of the insulation sheet 4 overlapped in the winding direction. Thus, the fixed end portions 4P of the insulation sheet 4 do not protrude out of the assembled coils 3. The insulation sheet 4 does not have to be placed in a section (outside) not needing interphase insulation.

In the present embodiment, the insulation-sheet fixing step for the slant portions of the coils is performed by fixing the end portions 5P of the insulation sheet 5 folded in the direction different from the winding direction and overlapped each other or the end portions 6P of the insulation sheet 6 folded in the direction different from the winding direction and overlapped each other. Even if the sections wrapped with the insulation sheets have an uneven or indented coil shape or the sections wrapped with the insulation sheets are slanted, the overlapped end portions 5P of the insulation sheet 5 can be easily fixed to each other and the overlapped end portions 6P of the insulation sheet 6 can be easily fixed to each other. Accordingly, the insulation sheets 5 and 6 can be placed in the sections needing interphase insulation even if the section(s) is hard to fix the insulation sheet 5 or 6.

In the present embodiment, for at least the horizontal portions of the coil end portions of the assembled coils 3, the insulation-sheet fixing step is performed by fixing the end portions 4P of the insulation sheet 4 overlapped in the winding direction and the slot inserting step is performed by inserting the assembled coils 3 in the slots from the horizontal portion side. Accordingly, during insertion of the assembled coils 3 in the slots of the stator core 7, the wound insulation sheets 4 are not damaged and coil assembling workability is enhanced. This is because the end portions 4P of the insulation sheet 4 hardly protrude out of the assembled coils 3 and thus do not interfere with the stator core 7 and the adjacent coils.

In the present embodiment, each of the insulation sheets 4, 5, and 6 is a sheet made by for example bonding the thermoplastic resin film 42, 52, or 62 made of for example polyethylene terephthalate onto the base sheet 41, 51, or 61 made of for example meta-based aramid fiber and so on having high electrical insulation property and high heat resistance property. Each of the insulation sheets 4, 5, and 6 is configured so that the thermoplastic resin film 42, 52, or 62 made of for example polyethylene terephthalate having a melting temperature lower than a melting temperature of an insulation coating that covers the base sheet 41, 51, or 61 and the flat wires of the cassette coils 1 and 2 is stuck to the base sheet 41, 51, or 61. In the insulation-sheet fixing step, the thermoplastic resin films 42, 52, and 62 are fixed by welding. Thus, while the insulation coating of the base sheets 41 51, and 61 and the insulation coating of the flat wires retain the insulation function, the insulation sheets 4, 5, and 6 each of which is in overlapping form can be simply and reliably fixed.

The apparatus for manufacturing the stator of the rotary electric machine according to the present embodiment configured as above can provide the following operations and effects. In the present embodiment, there are included the assembled-coil assembling means for assembling adjacent two interphase cassette coils 1 and 2 to form one set of assembled coils 3, the insulation sheet winding means for winding the insulation sheet 4, 5, or 6, cut in a predetermined shape, around the outer periphery of the proximity section in which the cassette coils of the assembled coils 3 are located close to each other, the fixing means for fixing the end portions 4P, 5P, or 6P of the wound insulation sheet 4, 5, or 6, and the slot inserting means for arranging a plurality of sets of the assembled coils 3, each set being bound together by the fixed end portions 4P, 5P, or 6P of the insulation sheet 4, 5, or 6, in the circumferential direction of the stator core 7 and then inserting the assembly in the slots of the stator core 7 in the axial direction of the stator core 7. The insulation sheet 4, 5, or 6 cut in a predetermined shape is wound and fixed around the section needing interphase insulation and the assembly is inserted in the slots. Accordingly, the apparatus for manufacturing the stator 8 of the rotary electric machine can simply and reliably place the insulation sheet 4, 5, or 6 in the section adjacent to the different phase and needing interphase insulation therefrom and can contribute to reduction of insulation material and coil assembling cost.

The stator of the rotary electric machine in the present embodiment configured as above can provide the following operations and effects. In the present embodiment, the adjacent two in-phase cassette coils 1 and 2 are assembled together to form one set of assembled coils 3, the insulation sheets 4, 5, or 6 cut in a predetermined shape is wound on the outer periphery of the proximity section in which the cassette coils 1 and 2 of the assembled coils 3 are close to each other, and each coil end portion is provided with the insulated parts on which the end portions 4P, 5P, or 6P of the insulation sheet 4, 5, or 6 is fixed, the insulated parts being displaced by slot pitches in the circumferential direction of the stator core 7. Thus, the insulation sheets 4, 5, and 6 can be reliably placed in the sections in which different phase coils are close to each other, likely causing insulation breakdown.

Specifically, one-side insulated part of a certain set of assembled coils and the other-side insulated part of a set of different-phase assembled coils adjacent thereto are placed in one proximity section so the insulated parts are displaced in the circumferential direction of the stator core 7. Accordingly, the insulation sheets 4, 5, and 6 can be placed in almost all the sections needing interphase insulation while the one-side insulated part and the other-side insulated part complement each other. Since the insulation sheets 4, 5, and 6 can be limited to the sections needing interphase insulation, a use amount of the insulation material can be reduced, which contributes to cost reduction.

### (Second Embodiment)

Next, a second embodiment of a stator of a rotary electric machine, a method for manufacturing the stator, and an apparatus for manufacturing the stator according to the present invention will be explained referring to accompanying drawings.

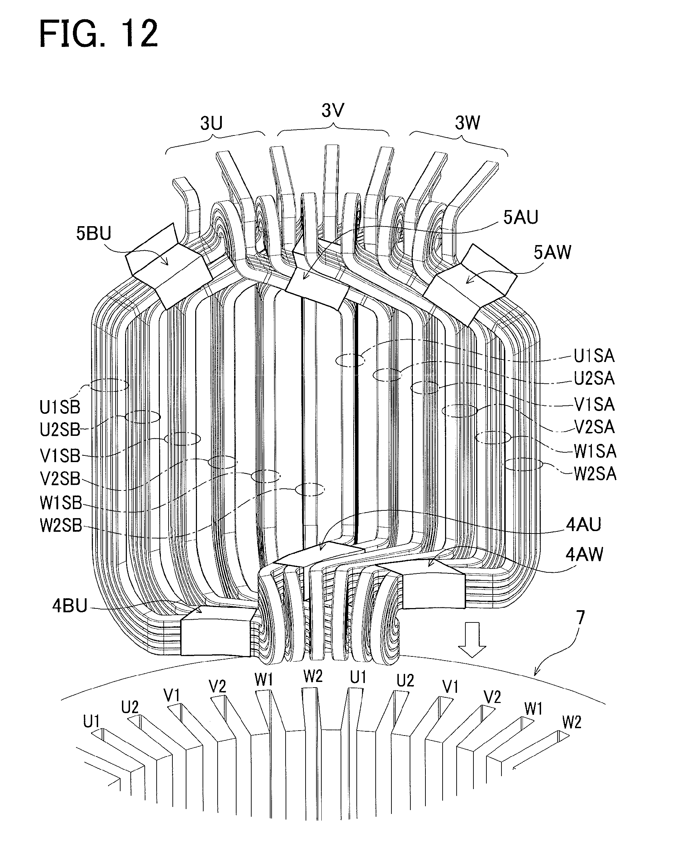

FIG. 12 is a perspective view showing a cage-shaped coil (only part thereof is illustrated) including the assembled coils 3 bound together with the insulation sheets 4, 5, and 6 having the fixed end portions 4P, 5P, and 6P and located on alternate set. The second embodiment is different from the first embodiment in that the assembled coils 3 bound with the insulation sheets 4, 5, and 6 having the fixed end portions 4P, 5P, and 6P and arranged on alternate set but is common to the first embodiment in other parts or components. The following explanation is thus made with a focus on the differences from the first embodiment. The common parts or components to the first and second embodiments are assigned the same reference signs in the drawings and their explanation is appropriately omitted.

As shown in FIG. 12, the U-phase assembled coils 3U, the V-phase assembled coils 3V, and the W-phase assembled coils 3W are arranged in overlapping relation clockwise in the circumferential direction of the stator core 7. In the second embodiment, the insulation sheets 5AU and 5BU wound and fixed around the slant portions of the U-phase assembled coils 3U and the insulation sheets 5AW and 5BW wound and fixed around the slant portions of the W-phase assembled coils 3W are placed only in the sections close to the slant portions of the adjacent different-phase assembled coils. No insulation sheet is wound around the slant portions of the V-phase assembled coils 3V

However, for example, the insulation sheet 5AU wound and fixed around the right-side slant portions of the U-phase assembled coils 3U in the figure is held in the section close to the right-side slant portions of the V-phase assembled coils 3V in the figure to serve for interphase insulation between the U and V phases. Further, the insulation sheet 5AW wound and fixed around the right-side slant portions of the W-phase assembled coils 3W in the figure is held in the section close to the right-side slant portions of the V-phase assembled coils 3V to serve for interphase insulation between the V and W phases.

Moreover, the insulation sheets 4AU and 4BU wound and fixed around the horizontal portions of the U-phase assembled coils 3U and the insulation sheets 4AW and 4BW wound and fixed around the horizontal portions of the W-phase assembled coils 3W are placed only in the sections close to the horizontal portions of respective adjacent different-phase assembled coils. No insulation sheet is wound around the slant portions of the V-phase assembled coils 3V

However, for example, the insulation sheet 4AU wound and fixed around the right-side horizontal portions of the U-phase assembled coils 3U is held in the section close to the right-side horizontal portions of the V-phase assembled coils 3V to serve for interphase insulation between the U and V phases. Further, the insulation sheet 4AW wound and fixed around the right-side horizontal portions of the W-phase assembled coils 3W is held in the section close to the right-side horizontal portions of the V-phase assembled coils 3V to serve for interphase insulation between the V and W phases.

One-side insulation sheets wound on alternate sets of the assembled coils ensure insulation from the adjacent different-phase assembled coils. In this case, no insulation sheet is wound on the adjacent assembled coils, but each of the insulation sheets is partially held between the sections needing interphase insulation and thus a gap is generated by the thickness of the insulation sheet even in a section uncovered by the insulation sheet. As a result, the interphase insulation is ensured by the gap.

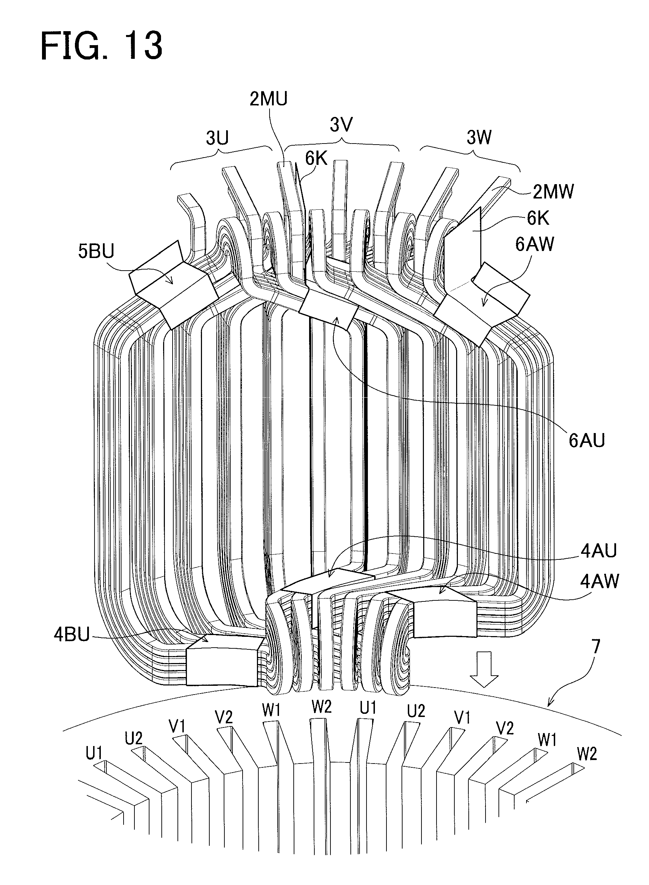

FIG. 13 shows a cage-shaped coil (only part thereof is illustrated) in which alternate sets of the assembled coils are attached with the insulation sheets having the extended portions extending toward the coil terminal portions. In the present embodiment, the insulation sheet 6AU and the insulation sheet 6AW respectively replace the insulation sheet 5AU wound and around the right-side slant portions of the U-phase assembled coils 3U and the insulation sheet 5AW wound and fixed around the right-side slant portions of the W-phase assembled coils 3W in FIG. 12. The extended portions 6K of the insulation sheets 6AU and 6AW stand up along terminal portions 2MU and 2MW respectively.

In this case, as with the above, the insulation sheet 6AU wound and fixed around the right-side slant portions of the U-phase assembled coils 3U and the insulation sheet 6AW wound and fixed around the right-side slant portions of the W-phase assembled coils 3W are placed only in the sections close to the slant portions of respective adjacent different-phase assembled coils. No insulation sheet is wound on the slant portions of the V-phase assembled coils 3V

However, for example, the insulation sheet 6AU wound and fixed around the right-side slant portions of the U-phase assembled coils 3U is held in the section close to the right-side slant portion of the V-phase assembled coils 3V to serve for interphase insulation between the U and V phases. Further, the insulation sheet 6AW wound and fixed around the right-side slant portions of the W-phase assembled coils 3W is held in the section close to the right-side slant portions of the V-phase assembled coils 3V to serve for interphase insulation between the V and W phases.

Accordingly, the insulation sheets on one side wound around the alternate sets of the assembled coils ensure insulation from the adjacent different-phase assembled coils. In this case, no insulation sheet is wound on the adjacent assembled coils, but the insulation sheet is partially held between the sections needing interphase insulation and thus a gap is generated by the thickness of the insulation sheet even in a section uncovered by the insulation sheet. As a result, the interphase insulation is ensured by the gap.

### <Operations and Effects>

In the present embodiment, the slot inserting step is performed by placing the assembled coils 3 bound together by the insulation sheets 4, 5, and 6 having the fixed end portions 4P, 5P, and 6P on alternate sets. This can reduce the sections wrapped with the insulation material to the minimum. In this case, no insulation sheet is wound on the adjacent assembled coils 3, but the insulation sheet is partially held between the sections needing interphase insulation and thus a gap is generated by the thickness of each insulation sheet 4, 5, and 6 even in a section uncovered by the insulation sheet, 4, 5, or 6. As a result, the interphase insulation is ensured by the gap. This can cut an amount of the insulation material into half and make the insulation sheet winding work easy, thus reduce coil winding costs. The extended portions 6K of the insulation sheets 6AU and 6AW stand up along the terminal portion 2MU or 2MW. This enhances insulation capability between the upper concentric turn portion G and the terminal portions M and N.

The present invention is not limited to the above embodiments and may be embodied in other specific forms without departing from the essential characteristics thereof.
(1) In the above embodiments, for example, the insulation sheets are fixed by welding using ultrasonic vibration but may be fixed by thermal welding using a welder. This thermal welding can provide an advantage that can shorten a welding time.
(2) In the above embodiment, for example, each insulation sheet is formed as a sheet consisting of a base sheet made of meta-based aramid fiber and so on having high electrical insulation property and high heat resistance property and a thermoplastic resin film such as polyethylene terephthalate bonded to the surface of the base sheet. The base sheet however is not limited to the meta-based aramid fiber and a paper or resin sheet may be adopted as long as it has high electrical insulation property and high heat resistance property. Furthermore, the thermoplastic resin film may be coated by an electrostatic coating technique or the like instead of bonding.
(3) In the above embodiments, for example, the thermoplastic resin film is welded. As an alternative, instead of the thermoplastic resin film, an adhesion may be applied to the base sheet so that the wound insulation sheet is fixed with the adhesion. In this case, the insulation sheet can be directly bonded to the coils even when the end portions of the insulation sheet are not overlapped.
(4) In the above embodiment, for example, the assembled coils are inserted in the axial direction of the stator core. As an alternative, the stator core may be configured as a split core separated in a radial direction so that the assembled coils are inserted in the radial direction of the stator core.

### INDUSTRIAL APPLICABILITY

The present invention is utilizable as the stator suitable for a rotary electric machine to be used in driving an electric vehicle, a hybrid vehicle, etc., the method manufacturing the same, and the apparatus for manufacturing the same.

### REFERENCE SIGNS LIST

- 1, 2: Cassette coil
- 3: Assembled coils
- 4, 5, 6: Insulation sheet
- 7: Stator core
- 8: Stator
- 3U: U-phase assembled coils
- 3V: V-phase assembled coils
- 3W: W-phase assembled coils
- SA, SB: In-slot wire portion
- EA, EB: Slant portion
- FA, FB: Horizontal portion
- G: Upper concentric turn portion
- H: Lower concentric turn portion
- M, N: Terminal portion
- IA, IB: Upper curved portion
- JA, JB: Lower curved portion
- K: Transfer table
- Q: Ultrasonic horn
- R: Winding roller
- T: Backing metal

## Claims

1. A method for manufacturing a stator of a rotary electric machine, the stator including cassette coils each formed of a flat rectangular conductor wire wound in a distributed winding form and a stator core including slots in which the cassette coils are inserted,
wherein the method includes:
an assembled-coil assembling step of assembling a plurality of adjacent in-phase cassette coils to form a set of assembled coils;
an insulation-sheet winding step of winding an insulation sheet cut in a predetermined shape around an outer periphery of a proximity section of the assembled coils in which the cassette coils are located close to each other;
an insulation-sheet fixing step of fixing end portions of the wound insulation sheet to each other; and
a slot inserting step of overlapping sets of the assembled coils in a circumferential direction of the stator core, each set being bound together by the insulation sheet having the end portions fixed to each other, and inserting the assembled coils in the slots.

2. The method for manufacturing a stator of a rotary electric machine according to claim 1, wherein the insulation-sheet winding step includes winding the insulation sheet in a section of a coil end portion of the assembled coils, the section being close to a coil end portion of an adjacent different phase.

3. The method for manufacturing a stator of a rotary electric machine according to claim 2, wherein the slot inserting step includes alternately placing the sets of assembled coils bound together by the insulation sheet having the end portions fixed to each other.

4. The method for manufacturing a stator of a rotary electric machine according to any one of claims 1 to 3, wherein the insulation-sheet fixing step includes fixing the end portions of the insulation sheet to each other, the end portions being overlapped in a winding direction.

5. The method for manufacturing a stator of a rotary electric machine according to any one claims 1 to 3, wherein the insulation-sheet fixing step includes fixing the end portions of the insulation sheet to each other, the end portions being bent in a direction different from a winding direction and overlapped each other.

6. The method for manufacturing a stator of a rotary electric machine according to any one claims 1 to 5, wherein the slot inserting step includes inserting the assembled coils in the slots in an axial direction of the stator core.

7. The method for manufacturing a stator of a rotary electric machine according to claim 2 or 3, wherein
the insulation-sheet fixing step includes fixing the end portions of the insulation sheet overlapped in a winding direction in at least one side of the coil end portions, and
the slot inserting step includes inserting the assembled coils in the slots from the one side.

8. The method for manufacturing a stator of a rotary electric machine according to any one of claims 1 to 7, wherein
the insulation sheet is formed of a base sheet and thermoplastic resin coated on a surface of the base sheet, the thermoplastic resin having a melting temperature lower than a melting temperature of the base sheet and an insulation coating covering the flat wire, and
the insulation-sheet fixing step includes fixing the thermoplastic resin by welding.

9. An apparatus for manufacturing a stator of a rotary electric machine, the stator including cassette coils each formed of a flat wire wound in a distributed winding form and a stator core including slots in which the cassette coils are inserted, the apparatus including:
an assembled-coil assembling means to assemble a plurality of adjacent in-phase cassette coils to form a set of assembled coils;
an insulation sheet winding means to wind an insulation sheet cut in a predetermined shape around an outer periphery of a proximity section of a coil end portion of the assembled coils in which the cassette coils are located close to each other;
an insulation sheet fixing means to fix end portions of the wound insulation sheet to each other; and
a slot inserting means to overlap sets of the assembled coils in a circumferential direction of the stator core, each set being bound together by the insulation sheet having the end portions fixed to each other, and insert the assembled coils in slots of the stator core.

10. A stator of a rotary electric machine, including cassette coils each formed of a flat wire wound in a distributed winding form and a stator core including slots in which the cassette coils are inserted,
wherein a plurality of adjacent in-phase cassette coils are assembled to form a set of assembled coils,
an insulation sheet cut in a predetermined shape is wound around an outer periphery of a proximity section of a coil end portion of the assembled coils in which the cassette coils are located close to each other, and
the coil end portion is provided with insulated portions on each of which the end portions of the insulation sheet are fixed so that the insulated portions are displaced by a slot pitch in a circumferential direction of the stator core.
